# EUROPÄISCHE PATENTSCHRIFT

(11) **EP 1 186 927 B1**
(45) Veröffentlichungstag und Bekanntmachung des Hinweises auf die Patenterteilung: **08.06.2005**
(21) Anmeldenummer: 01118126.0
(22) Anmeldetag: 26.07.2001
(51) Int. Cl.: G02B 7/02, G02B 6/42, G02B 6/32

(54) **Verstellvorrichtung und Verfahren zu ihrer Justierung**
Adjustment device and method
Appareil et méthode d'ajustement

(30) Priorität: 03.08.2000 DE 10037975
(43) Veröffentlichungstag der Anmeldung: 13.03.2002
(73) Patentinhaber: Infineon Technologies AG, 81669 München (DE)
(72) Erfinder: Auracher, Franz, 82065 Baierbrunn (DE); Hanebuth, Henning, 85622 Feldkirchen (DE); Wittmann, Julius, 82041 Oberhaching (DE); Hamann, Christoph, 23188 Williamsburg (DE)
(74) Vertreter: Graf Lambsdorff, Matthias, Dr.

(56) Entgegenhaltungen:
- EP-A- 0 373 225
- EP-A- 0 717 393
- DE-A- 2 918 100
- DE-C- 19 704 502
- US-A- 5 537 276
- US-A- 5 572 895
- US-A- 6 011 239
- US-A- 6 030 114
- US-A- 6 154 952

## Beschreibung

Die Erfindung betrifft eine Verstellvorrichtung, insbesondere für eine Linse in einer optoelektronischen Sende-/Empfangseinrichtung und ein Verfahren zur Justierung der Verstellvorrichtung.

In optoelektronischen Sende-/Empfangseinrichtungen für die Kommunikation über Glasfasernetze besteht eines der Hauptprobleme darin, eine optische Verbindung zwischen einer in einer Anschlußöffnung angekoppelten Lichtleitfaser und einem Sende-/Empfangsbauelement bereitzustellen. Bei einem für eine Sendeeinrichtung verwendeten Lasermodul wird der divergente Laserstrahl einer Laserdiode mittels einer oder mehrerer Linsen derart auf die Stirnfläche einer Lichtleitfaser abgebildet, daß ein möglichst hoher Einkoppelwirkungsgrad der Laserleistung in die Lichtleitfaser erzielt wird. Bei der Ankopplung von Monomode-Glasfasern wird dies dadurch erreicht, daß durch eine einzige Linse oder ein Linsenpaar die sogenannte Fleckgröße des Lasers auf die Lichteintrittsöffnung der Glasfaser abgebildet wird. Bei Verwendung zweier Linsen wird wegen des üblicherweise großen Öffnungswinkels der Laserstrahlung als erste Linse bevorzugt eine asphärische Linse eingesetzt. Bei den Zweilinsen-Anordnungen wird ferner häufig ein kollimierter Strahl zwischen den beiden Linsen angestrebt, weil dann der Abstand zwischen den Linsen unkritisch ist. Es ist jedoch bei Zweilinsen-Anordnungen ebenfalls möglich, daß die erste Linse ein stark vergrößertes Zwischenbild erzeugt, das von der zweiten Linse wieder auf die Lichteintrittsöffnung der Faser verkleinert wird. Halbleiterlaser für optische Weitverkehrs-Übertragungssysteme emittieren bei Wellenlängen von 1,3 µm oder 1,55 µm und haben Fleckradien der Größenordnung 1 µm. Entsprechende Monomode-Glasfasern haben Fleckradien in einer Größenordnung von 5 µm. Um einen hohen Koppelwirkungsgrad zu erzielen, muß die erste Linse typischerweise mit einer Genauigkeit von ± 0,5 µm in x- und y- Richtung und von ± 2 bis 5 µm in z- Richtung bzgl. des Laserchips justiert und fixiert werden. Aus Gründen der Langzeitstabilität wird die Fixierung üblicherweise entweder mittels einer AuSn-Lötung oder mittels Laserschweißen durchgeführt. Damit die Linsenträger mit vertretbaren Toleranzen hergestellt werden können bzw. ein Schweißverzug beim Fixieren des Linsenträgers korrigiert werden kann, ist es besonders vorteilhaft, wenn eine gezielte Nachjustierung des Linsenträgers und damit der Linsenposition mittels Laserimpulsen durchgeführt werden kann. Anstelle der Linsenankopplung kann die Glasfaser auch direkt an den Laser angekoppelt werden. Häufig wird dazu die Faserstirnfläche aufgeschmolzen oder geätzt, so daß ein geeignetes Linsenprofil auf der Glasfaser selbst entsteht. In diesem Fall kann die (lokal metallisierte) Glasfaser z.B. durch Auflöten auf dem laserjustierbaren Träger befestigt werden.

Es sind bereits Verstellvorrichtungen für Linsen und Verfahren zu ihrer Justierung bekannt, bei denen laserjustierbare Stellelemente oder Aktuatoren eingesetzt werden. Diese bekannten Anordnungen beruhen auf dem Temperatur-Gradienten-Mechanismus (TGM), bei welchem ein auf die Oberfläche eines Blechteils auftreffender Laserstrahl durch Aufschmelzen des Materials an der Oberfläche über die Blechdicke ungleichmäßig verteilte Schrumpfspannungen in das Material einbringt. Dadurch verbiegt sich das Blechteil beim Abkühlen in Richtung des einfallenden Laserstrahls. Für einen Justiervorgang mit einseitiger Zugänglichkeit für den Laserstrahl bedeutet dies, daß nur in eine Richtung zuverlässig und definiert justiert werden kann, eine Distanz durch das Biegen also nur verlängert oder verkürzt werden kann. Unter Verwendung sogenannter Aktoren können allerdings auch andere Bewegungsrichtungen bei nur einseitiger Zugänglichkeit des Laserstrahls realisiert werden. Unter einem Aktor versteht man dabei eine 3-dimensionale Blechstruktur, an der durch Einbringung von Schrumpfspannungen an bestimmten Stellen definierte Bewegungen des Aktors in verschiedene Richtungen ausgelöst werden können.

In der EP 0 373 225 A1 ist eine optoelektronische Halbleitereinrichtung beschrieben, in welcher ein optoelektronisches Halbleiterbauelement von einem Trägerblock gehaltert wird und an dem Trägerblock gleichzeitig ein Linsenhalter befestigt ist, in den eine gegenüber dem optoelektronischen Bauelement positionierte Linse montiert ist. Der Linsenhalter ist derart vorgeformt, daß er durch örtliche Beaufschlagung mit einem Laserstrahl in einer gewünschten Weise verformt und somit die Position der Linse in bezug auf das optoelektronische Bauelement verändert werden kann.

Ferner ist in der US-5,572,895 ein Verfahren zur wechselseitigen Verstellung zweier über eine Brücke verbundenen Gliedern eines oder mehrerer Aktuatoren beschrieben. Auch bei diesem Verfahren wird den Aktuatoren an geeigneten Stellen Laserenergie zugeführt, um eine gewünschte Verstellung herbeizuführen.

Schließlich offenbart die US-6,030,114 einen laserjustierbaren Sicherungsschalter, bei welchem nach demselben Prinzip wie oben dargestellt ein vorgebogener Kontaktanschluß eines Bimetallstreifens zu Kalibrationszwecken unter Beaufschlagung mit einem Laserstrahl verstellt werden kann.

Diese bekannten Verfahren haben jedoch den Nachteil, daß sie zumeist nur ein empirisches Vorgehen bei der Justage durch Beaufschlagung mit einem Laserstrahl zulassen. Außerdem sind die Verstellvorrichtungen zumeist so konfiguriert, daß sie nur eine Grobjustierung oder eine Feinjustierung erlauben. In vielen Fällen ist auch die Justierung wegen der bei der Laserbearbeitung eingebauten Spannungen nicht langzeitstabil.

Die Druckschrift DE 197 04 502 C1 beschreibt ein Lasermodul, welches einen Träger, einen auf dem Träger befestigten Halbleiter-Laser und einen auf dem Träger befestigten Umlenkspiegel aufweist. Mit dem Träger ist außerdem ein als Verstellelement ausgebildeter metallischer, blechförmiger Linsenträger verbunden, an dessen einem freien Ende eine Linse befestigt ist. Die Bestandteile des Lasermoduls sind gegenseitig derart positioniert, dass der Strahlengang des von dem Halbleiter-Laser emittierten Lichtes über den Umlenkspiegel durch die Linse verläuft und durch gezielte Verformung des Linsenträgers mittels lokaler Erwärmung mit einem externen Laserstrahl die Linse relativ zum Strahlengang justierbar ist.

Die Druckschrift EP 0 717 393 A1 beschreibt ebenfalls ein Verfahren zum Justieren der Position eines Verstellgliedes durch Verwendung von Materialien mit Formgedächtnis, bei welchem ein justierbarer Abschnitt des Verstellelements lokal erwärmt wird.

Es ist somit Aufgabe der vorliegenden Erfindung, eine Verstellvorrichtung, insbesondere für eine Linse in einer optoelektronischen Sende-/Empfangseinrichtung, und ein Verfahren zur Justierung der Verstellvorrichtung anzugeben, durch welche eine gezieltere Justage durch Bereitstellung einer Grobjustierung und einer Feinjustierung durchgeführt werden kann.

Diese Aufgabe wird durch eine Verstellvorrichtung nach den Merkmalen des Patentanspruchs 1 und ein Verfahren zum Justieren einer Verstellvorrichtung nach den Merkmalen des Patentanspruchs 15.

In einer erfindungsgemäßen Verstellvorrichtung sind eine Anzahl unabhängig voneinander wirkender Stellelemente, die durch lokale Beaufschlagung von Strahlungsenergie, vorzugsweise in Form von Laserstrahlung, in ihrer Form veränderbar sind, an ihrem einen Ende mit einer ortsfesten Basisplatte und an ihrem anderen Ende mit einer beweglichen Trägerplatte verbunden, wobei die Verstellelemente an verschiedenen Punkten mit der Basisplatte und an verschiedenen Punkten mit der beweglichen Trägerplatte verbunden sind. Auf die Trägerplatte kann ein zu justierendes optisches Bauelement wie eine Linse montiert werden. Die Verstellvorrichtung kann dabei auch Teil einer optoelektronischen Sende-/Empfangseinrichtung sein, welche ein optoelektronisches Bauelement wie eine Laserdiode oder einen Halbleiter-Photodetektor und eine Anschlußöffnung für eine Lichtleitfaser aufweist und bei welcher ein das optoelektronische Bauelement halternder Träger an ortsfesten Teilen der Verstellvorrichtung montiert ist, wobei im montierten und justierten Zustand das optoelektronische Bauelement mit der Linse und der Lichteintrittsöffnung der Lichtleitfaser exakt ausgerichtet ist.

Die Erfindung schafft die Möglichkeit, zwischen Basisplatte und Trägerplatte eine Mehrzahl von Stellelementen verschiedener Bauart anzuordnen, mit denen die verschiedenen Freiheitsgrade der Justage und der Bewegung der Trägerplatte unabhängig voneinander einstellbar sind. Insbesondere schafft die Erfindung die Möglichkeit, mehrere Stellelemente derart relativ zueinander anzuordnen, daß sie mit unterschiedlicher Übersetzung wirken, so daß ein Stellelement für die Grobjustage und das zweite für die Feinjustage genutzt werden kann.

Die einzelnen Stellelemente können unterschiedliche, zum Teil an sich im Stand der Technik bekannte Bauarten aufweisen. Ein Stellelement kann beispielsweise in einer besonders einfachen Ausführungsart als lineares, insbesondere stabförmiges Stellelement ausgebildet sein, welches durch Beaufschlagung mit einem Laserstrahl oder dergleichen entlang einer Richtung in seiner Länge veränderbar ist. Dabei kann vorgesehen sein, daß das Stellelement in seiner ganzen Länge durch einen dünnen Stab gebildet ist, der zur Längenänderung an jeder Stelle mit Strahlungsenergie beaufschlagt werden kann. Da dies in der Regel nicht besonders stabil ist, wählt man meist Ausführungsformen, bei denen zwischen stabileren Abschnitten größeren Durchmessers (Stellelementgliedern) Schwachstellen geringeren Durchmessers (Stege) gebildet sind, an denen die Strahlungsenergie eingekoppelt werden soll und an denen die eigentliche Längenänderung stattfindet. So kann ein lediglich in einer Richtung wirkendes Stellelement eine Anzahl von zwei oder mehr Stellelementgliedern aufweisen, die in Richtung der Normalen zwischen der Basisplatte und der Trägerplatte mit einem Abstand voneinander angeordnet und jeweils durch mindestens einen in Normalenrichtung verlaufenden Steg miteinander verbunden sind. Dabei können auch mehrere Stege parallel nebeneinander angeordnet sein. Diese Stege können so eng benachbart sein, daß auch die Beaufschlagung von nur einzelnen von ihnen nur zu einer Längenänderung in Normalenrichtung führt. Die Stege können jedoch auch weiter voneinander beabstandet sein, so daß eine durch Strahlungsbeaufschlagung eines einzelnen Steges herbeigeführte Längenänderung eine Bewegung der Trägerplatte mit einer Komponente in Normalenrichtung und einer Komponente quer zur Normalenrichtung bewirkt.

Falls bei der vorstehend beschriebenen Ausführungsform die Stege relativ weit voneinander beabstandet sind, so kann durch einen Justagevorgang eine Justage in zwei Freiheitsgraden durchgeführt werden. Vorteilhafter ist es dagegen, wenn die Justage in den zwei Freiheitsgraden durch voneinander unabhängige Justagevorgänge durchgeführt werden kann. Dies wird durch eine Verstellvorrichtung erreicht, bei welcher ein Stellelement eine Anzahl von drei oder mehr Stellelementgliedern aufweist, die zwischen der Basisplatte und der Trägerplatte angeordnet sind, wobei mindestens zwei Stellelementglieder derart relativ zueinander angeordnet sind, daß sie in Richtung der Normalen zwischen der Basisplatte und der Trägerplatte mit einem Abstand voneinander angeordnet und durch mindestens einen Steg miteinander verbunden sind und mindestens zwei andere Stellelementglieder derart relativ zueinander angeordnet sind, daß sie in einer lateralen Richtung voneinander beabstandet und durch mindestens einen Steg miteinander verbunden sind.

Ein oben erwähnter wesentlicher Gesichtspunkt der Erfindung besteht darin, daß sie die Möglichkeit eröffnet, eine Verstellvorrichtung zu konstruieren, bei der für einen Freiheitsgrad zunächst eine Grobjustage und anschließend für denselben Freiheitsgrad eine Feinjustage durchführbar ist. Zu diesem Zweck ist ein erstes Stellelement mit der Trägerplatte in einem Abstand a von einem äußeren Rand der Trägerplatte verbunden und in einem Abstand b hiervon ist ein zweites Stellelement mit der Trägerplatte verbunden, so daß mit dem ersten Stellelement eine Grobjustage und mit dem zweiten Stellelement eine Feinjustage mit dem Übersetzungsverhältnis a/(a+b) durchführbar ist.

Ein anderes ebenso einfaches Stellelement ist ein zweidimensionales, insbesondere plattenförmiges Stellenelement, welches durch entsprechende Beaufschlagung seine Form in zwei Richtungen ändern kann.

Es sind auch andere komplexere Bauarten von Stellelementen vorstellbar, welche zwischen die Basisplatte und die Trägerplatte montiert werden können. Beispielsweise kann ein aus der bereits erwähnten EP-0 373 225 im wesentlichen bekanntes Stellelement verwendet werden, welches zwei in einem Winkel zueinander angeordnete und durch ein Gelenk verbundene ebene Abschnitte aufweist. Ein solches Stellelement kann wie die anderen beschriebenen Stellelemente aus einem Blechteil geformt sein. Das Gelenk an der Knickstelle zwischen den zwei ebenen Abschnitten kann in einfacher Weise durch eine verminderte Blechdicke und/oder durch Aussparungen in dem Blechteil gebildet sein. Eine komplette Verstellvorrichtung kann aus zwei oder mehr derartigen winkelförmigen Stellelementen gebildet sein, die auf zwei gegenüberliegenden Seiten der Trägerplatte angeordnet sind, wobei bevorzugtermaßen die Knickstellen der winkelförmigen Stellelemente einander zugewandt sind. Eine derartige Verstellvorrichtung hat den Vorteil, daß mit ihr je nach den Orten der Stellelemente, an denen die Strahlungsenergie zugeführt wird, Justagevorgänge in verschiedenen einander entgegengesetzten Richtungen durchgeführt werden können. Insbesondere kann für eine Vergrößerung des Abstandes der Trägerplatte von der Basisplatte die Strahlungsenergie den der Basisplatte zugewandten ebenen Abschnitten der Stellelemente zugeführt werden, und für eine Verkleinerung des Abstandes der Trägerplatte von der Basisplatte kann die Strahlungsenergie den der Trägerplatte zugewandten ebenen Abschnitten der Stellelemente zugeführt werden.

Wie in dieser konkreten Ausführungsform können derartige winkelförmige Stellelemente direkt mit der Basisplatte und der Trägerplatte verbunden sein, wobei an den Verbindungsstellen Gelenke vorgesehen sein können, die in einfacher Weise durch verminderte Blechdicke und/oder durch Aussparungen in dem Blechteil gebildet sind.

Es kann aber auch vorgesehen sein, daß ein Stellelement mit einem Winkelelement verbunden ist, welches zwei in einem Winkel zueinander angeordnete und durch ein Gelenk verbundene ebene und biegesteife Abschnitte aufweist, wobei das Winkelelement mit seinen ebenen Abschnitten mit der Basisplatte und der Trägerplatte verbunden ist und mindestens eine dieser Verbindungen ein Gelenk aufweist, welches vorzugsweise ebenfalls wie oben beschrieben geformt ist. Bei einer solchen Konstruktion wirkt das winkelförmige Stellelement beim Justagevorgang indirekt auf die Trägerplatte ein, indem es zunächst die ebenen Abschnitte des Winkelelements aufeinander zu oder voneinander weg bewegt.

Eine wichtige Anwendung der erfindungsgemäßen Verstellvorrichtung betrifft die Justage einer auf der Trägerplatte montierten Linse relativ zu einem optoelektronischen Bauelement wie einem Halbleiterlaser und einer Lichtein- oder Lichtaustrittsfläche einer Lichtleitfaser. Die Verstellvorrichtung kann somit Teil einer optoelektronischen Sende-/Empfangseinrichtung sein, welche ein Sende-/Empfangsbauelement, eine Anschlußöffnung für eine Lichtleitfaser und eine zwischen der Anschlußöffnung und dem Sende-/Empfangsbauelement angeordneten Linse sein, wobei die Linse auf einer Trägerplatte einer erfindungsgemäßen Verstellvorrichtung montiert ist. Das Sende-/Empfangsbauelement und/oder die Faseranschlußöffnung können dabei an feststehenden Teilen der Verstellvorrichtung wie der Basisplatte angebracht sein.

Die verschiedenen Anordnungen von Verstellvorrichtungen ermöglichen ein definiertes und reproduzierbares Justieren, so daß bei hohen Stückzahlen auch eine Automatisierung des Justiervorgangs möglich ist. Die erforderlichen (Linsen-)Träger können kostengünstig beispielsweise mittels üblicher Stanzund Biegeverfahren hergestellt werden.

Die Erfindung wird nachfolgend anhand mehrerer Ausführungsbeispiele und Ausführungsvarianten unter Bezugnahme auf die Zeichnungsfiguren näher läutert. Es zeigen:
- Fig. 1: eine Ausführungsform einer erfindungsgemäßen Verstellvorrichtung mit linearen, stabförmigen Verstellelementen;
- Fig. 2a-f: erfindungsgemäße Anordnungen von Verstellvorrichtungen;
- Fig. 3a-c: eine Ausführungsform einer erfindungsgemäßen Verstellvorrichtung mit zweidimensionalen Verstellelementen;
- Fig. 4a,b: eine Ausführungsform einer erfindungsgemäßen Verstellvorrichtung mit linearen Verstellelementen und flächigen Verbindungselementen;
- Fig.5a,b: mit einem flächigen Verbindungselement verbundenes winkelförmiges Verstellelement in perspektivischer Ansicht (a) und Seitenansicht (b);
- Fig.6: winkelförmiges Verstellelement, welches direkt mit Basisplatte und Trägerplatte verbunden ist;
- Fig.7a-d: eine Ausführungsform einer erfindungsgemäßen Verstellvorrichtung mit drei winkelförmigen Verstellelementen in perspektivischen Ansichten (a,b) und Seitenansichten (c,d) bei Justagevorgängen;
- Fig.8a,b: Verstellelemente für eine Justierung in einem Freiheitsgrad;
- Fig.8c,d: Verstellelemente für eine Justierung in zwei Freiheitsgraden;
- Fig.8e,f: Verstellelemente für eine unabhängige Justierung in zwei Freiheitsgraden;
- Fig.9: Verstellvorrichtung für Justage in drei Freiheitsgraden.

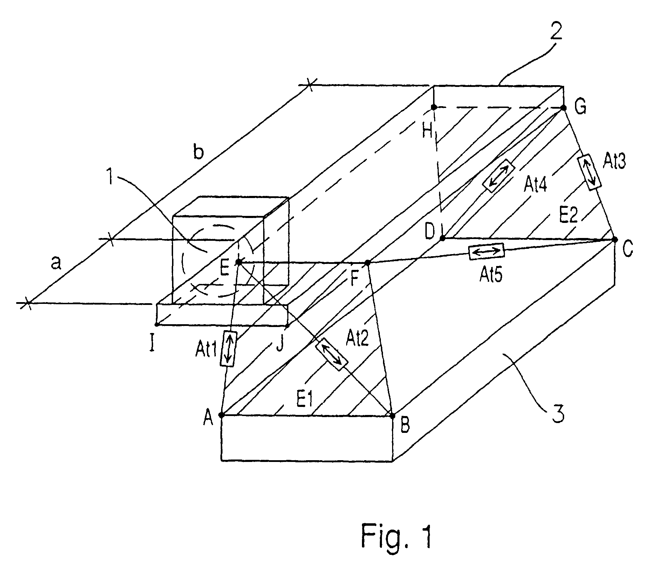

In Fig. 1 ist eine Ausführungsform einer erfindungsgemäßen Verstellvorrichtung schematisch dargestellt, bei welcher eine Justierung einer auf einer Trägerplatte 2 montierten Linse 1 ermöglicht werden soll.

Die Linse 1 ist auf einem Ende der biege- und verwindungssteifen Trägerplatte 2 montiert und diese ist i.a. in zwei Ebenen E1 und E2 mit der ebenfalls biege- und verwindungssteifen Basisplatte 3 verbunden. In Fig. 1 ist die Ebene E1 durch die Punkte A, B, F, E und die Ebene E2 durch die Punkte C, G, H, D definiert. Der Laserchip (nicht dargestellt) ist ebenfalls mit dieser Basisplatte 3 fest verbunden. Die Verbindungselemente in den Ebenen E1 und E2 sollen so ausgebildet sein, daß die Linse 1 bzgl. der Basisplatte 3 in x- und y-Richtung justierbar ist. Zur Justierung in x- und y-Richtung sind zweckmäßigerweise in den Ebenen E1 oder E2 oder in beiden Ebenen Verstellelemente oder Aktoren angeordnet. Der Einfachheit halber sind hier zunächst lineare Verstellelemente angenommen, die die Trägerplatte 2 an mindestens 3 Punkten mit der Basisplatte 3 verbinden. Sind in beiden Ebenen E1 und E2 Aktoren vorhanden, dann kann durch entsprechende Wahl der Abmessungen a und b in Fig. 1 in der Ebene E1 eine Grobverstellung und anschließend in der Ebene E2 entsprechend dem Übersetzungsverhaltnis a / (a + b) eine Feinjustierung der Linsenposition vorgenommen werden. Ermöglicht ein Aktor nur eine Verkürzung seiner Länge (z.B. durch Schrumpfen des Aktors bei Laserbeschuß), kann damit beispielsweise die Linse 1 durch Verkürzen des Aktors in Ebene E1 abgesenkt und anschließend wieder mittels des Aktors in Ebene E2 (in kleineren Schritten) angehoben werden. Wird eine dreidimensionale Justierung der Linsenposition (x-, y-, und z-Richtung) gewünscht, dann muß ein weiterer Aktor vorgesehen werden, der eine Verkippung der Ebenen E1 und E2 bewirkt. Fig. 1 zeigt eine mögliche prinzipielle Anordnung von Aktoren "At", die eine Grob- und Feinverstellung der Linsenposition in x- und y-Richtung sowie eine Verstellung in z-Richtung ermöglicht. Für die angeführte Anwendung konnte beispielsweise die "Grobverstellung" einen Verstellbereich von 1 bis 50 µm und die Feinverstellung einen Bereich von 0,1 bis 5 µm abdecken. Da die Justiertoleranz in z-Richtung für die gewählte Anwendung typischerweise eine Größenordnung größer ist als in x- und y-Richtung, reicht hier eine "Grobverstellung" in z-Richtung aus.

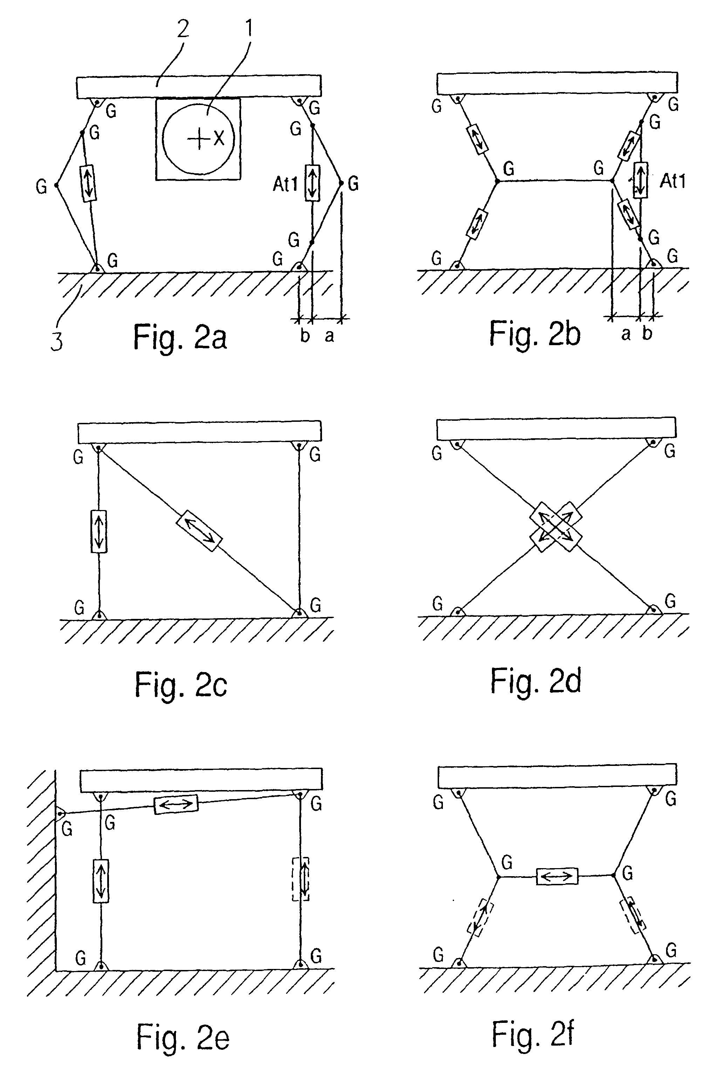

In Fig. 2a-f sind mögliche, zum Teil schon realisierte Anordnungen von Aktoren prinzipiell dargestellt, die eine Justierung in einer oder zwei Koordinatenrichtungen ermöglichen. Dabei sind in Fig. 2a,b Ausführungsbeispiele gezeigt, wie der Stellweg des Aktors im Verhältnis (a + b) / a vergrößert werden kann.

In den schematischen Darstellungen der Figuren 1 und 2 sind die Aufbauten ähnlich einem Fachwerk skizziert, wobei einzelne oder alle Streben des Fachwerks durch lineare, beispielsweise stabförmige Aktoren ersetzt sind, die über Gelenke G mit den anderen Streben verbunden sind. Um eine hohe Lagestabilität zu erzielen, ist es erforderlich, die Gelenke spielfrei auszuführen und für eine hohe Biege-, Verwindungsund Knicksteifigkeit des gesamten Aufbaus zu sorgen. Die erste Forderung wird am einfachsten durch die Verwendung von biegeweichen Festkörpergelenken "G" realisiert. Dazu werden die Gelenkverbindungen zwischen den Streben als Verbindungsstege mit kleinem Querschnitt (reduzierte Breite, evtl. auch reduzierte Dicke) ausgebildet. Die nötige Steifigkeit kann durch geschickte Formgebung des Aktors selbst oder durch geeignete zusätzliche Elemente erreicht werden.

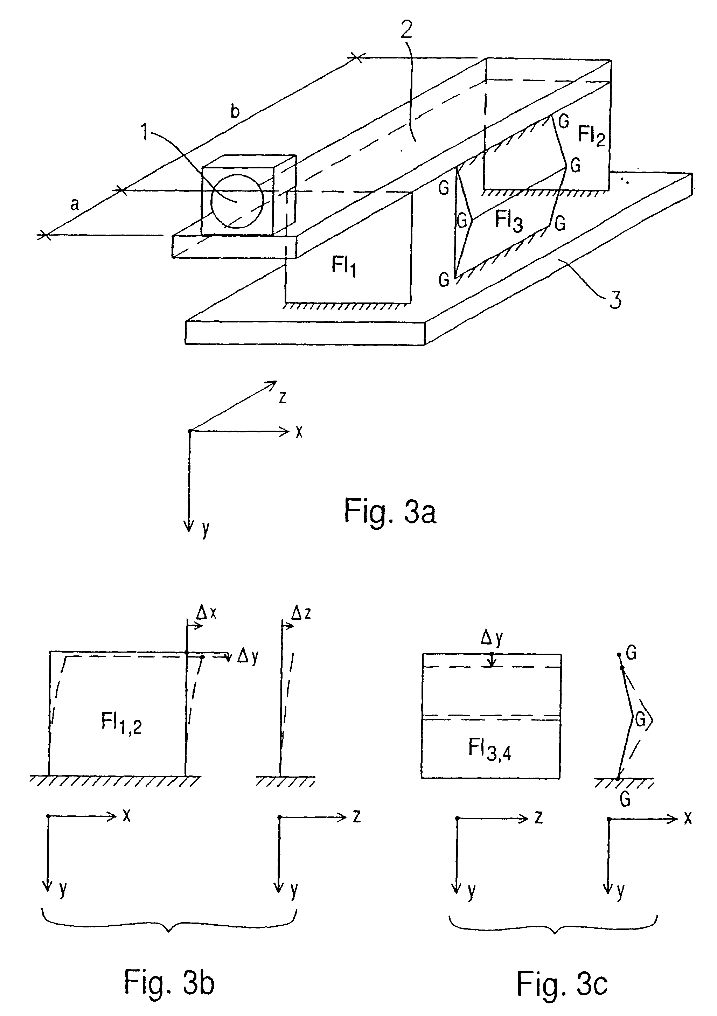

Ein sehr stabiler Aufbau wird erreicht, wenn anstelle einer fachwerksartigen Konstruktion mit Streben flexible zweidimensionale Verbindungselemente, im folgenden "Flexelemente" genannt, eingesetzt werden. Fig. 3a zeigt ein Beispiel für einen derartigen Aufbau, wobei zunächst angenommen ist, daß die Linse 1 nur in x- und y- Richtung justiert werden soll. Der Aufbau enthält zwei Flexelemente Fl₁ und Fl₂, die eine hohe Steifigkeit in der x- und y-Ebene aufweisen und ein oder zwei dazu orthogonale Flexelemente Fl₃ und - evtl. symmetrisch bzgl. der y-z-Ebene angeordnet Fl₄ (Fl₄ ist der Übersichtlichkeit halber nicht dargestellt), die in der y- und z- Ebene eine hohe Steifigkeit aufweisen. Fig. 3b zeigt, wie die Flexelemente Fl₁ und Fl₂ in der Ebene durch Laserbeschuß verzogen werden und somit die gewünschte Bewegung der Linse 1 in x- bzw. y-Richtung durchführen können. Geeignete Ausgestaltungen derartiger Flexelemente werden später gezeigt. Die biegeweichen Gelenke G in den Flexelementen Fl₃ und Fl₄ (s. Fig. 3c) ermöglichen diese Bewegung bei gleichzeitiger Stabilisierung der z-Position. Die Gelenke G sind als Festkörpergelenke mit kleinem Querschnitt (reduzierte Breite, evtl. zusätzlich reduzierte Dicke) ausgebildet.

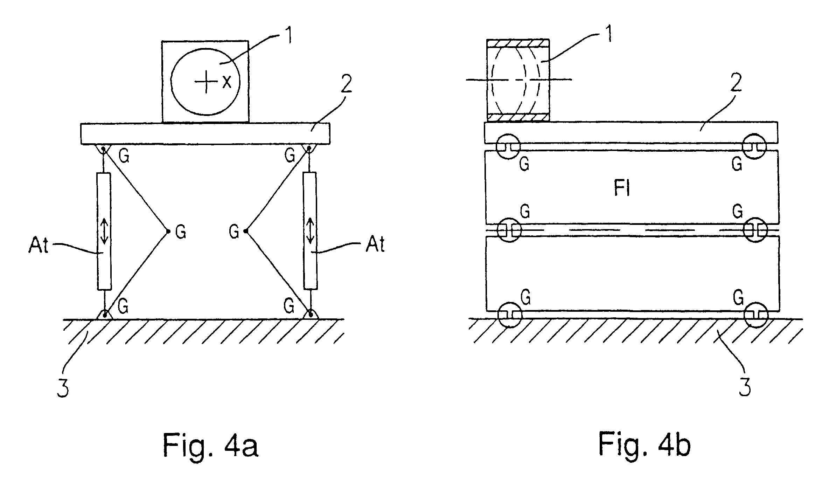

Fig. 4a,b zeigt eine Ausführungsform ähnlich Fig. 2a mit linearen Aktoren At, wobei die nötige Steifigkeit in der y- und z-Ebene durch das winkelförmige Verbindungselement (Flexelement) F1 erreicht wird. Zur Erhöhung der Biege- und Verwindungssteifigkeit der Flexelemente können diese durch entsprechende Formgebung (Pressen oder Biegen von geeigneten Profilen) versteift werden. Die Beweglichkeit in x-/y-Richtung wird mittels biegeweicher Festkörpergelenke erreicht, um eine Versteifung in der x- und y-Richtung mittels der gezeichneten Aktoren zu ermöglichen. Die Aktoren sind erfindungsgemäß ebenfalls als Festkörperelemente ausgeführt, die durch Laserbeschuß gezielt verformt werden können. Durch den Laserbeschuß wird entweder eine Verbiegung oder eine Schrumpfung des Festkörperelements erreicht, die zur gewünschten Bewegung des Aktors führt.

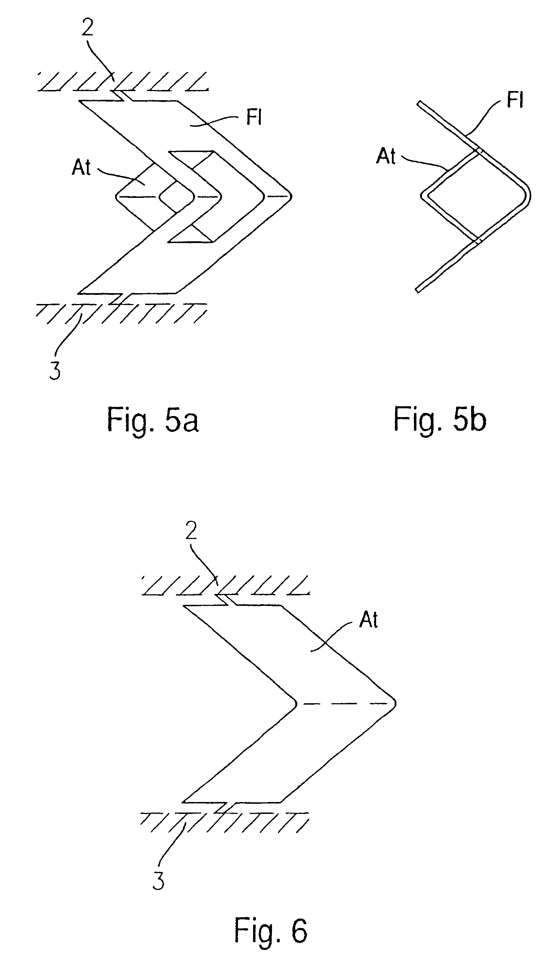

Fig. 5a,b und 6 zeigen Beispiele für Aktoren, bei denen eine Verbiegung durch Laserbeschuß genutzt wird. Je nach der Position des Laserbeschusses kann der Knickwinkel des Aktors vergrößert oder verkleinert werden. Derartige Aktoren sind beispielsweise in der EP-0 373 225 beschrieben. Fig.5a,b zeigen einen Aktor, welcher an den Enden seiner ebenen Abschnitte mit einem winkelförmigen Verbindungselement (Flexelement) F1 verbunden ist, welches seinerseits mit der Trägerplatte 2 und der Basisplatte 3 verbunden ist. Fig.6 zeigt dagegen ein winkelförmigen Aktor At, welcher direkt durch biegeweiche Festkörpergelenke mit der Trägerplatte 2 und der Basisplatte 3 verbunden ist. Die Gelenke sind wie dargestellt dadurch gebildet, daß Ausnehmungen in das Blechteil geformt sind, so daß in der Mitte nur noch ein dünner Steg verbleibt.

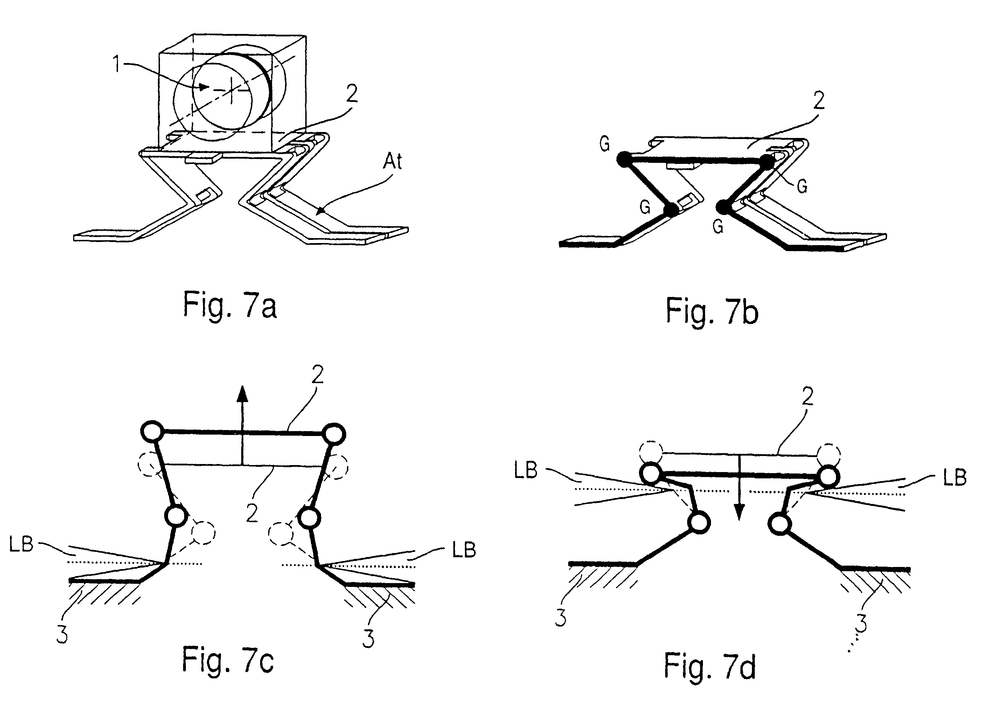

Für die räumliche Justierung mit dem Laserstrahl bei einseitiger Zugänglichkeit wurde die in Fig. 7a,b dargestellte Verstellvorrichtung konzipiert. Diese Verstellvorrichtung besteht aus einer Trägerplatte 2 für die Linse 2 bzw. den Linsenrahmen sowie aus Gründen der statischen Bestimmtheit aus 3 Aktorbeinen in Form von winkelförmigen Stellelementen. Es sind aber auch 2, 4 oder mehr Aktorbeine denkbar. In der Mitte und am oberen Ende sind die Beine mit Schlitzen versehen, die die Biegesteifigkeit des Materials an diesen Stellen schwächen. Dadurch wirken diese Bereiche des Aktors wie Gelenke während einer Laserstrahlbiegebearbeitung. Für eine Aufwärtsbewegung werden die Beine simultan am unteren Ende mit einem Laserstrahl LB beaufschlagt, siehe Fig. 7c. Aufgrund des Temperaturgradienten in der Wechselwirkungszone von Laserstrahl und Aktorbein werden Schrumpfspannungen ungleichmäßig über die Blechdicke in das Aktorbein eingebracht. Dadurch biegt sich das eine Ende des Aktorbeins zum einfallenden Laserstrahl LB hin. Aufgrund der Gelenkwirkung der durch die Schlitze geschwächten Bereiche bewegt sich die Trägerplatte 2 einschließlich Linse 1 nach oben. Durch den vergleichbaren Vorgang, nämlich die simultane Bearbeitung am oberen Ende der Beine mit dem Laserstrahl LB, kommt es zu einer Abwärtsbewegung, siehe Fig. 7d unten rechts. Dieser Aktor kann durch Zusatzelemente, wie in Fig. 3 mit Fl3 bezeichnet, auch in der Lateralebene versteift werden.

Ein Nachteil der auf Biegung beruhenden Aktoren ist, daß nach dem Laserbeschuß im Aktor mechanische Verspannungen eingebaut sind, die besonders bei Temperaturwechsel über lange Zeiträume Formänderungen zur Folge haben können. Ein Ausheilen der eingebauten Spannungen durch Tempern ist i.a. nicht möglich, da sonst die erzielte Verformung wieder teilweise verloren geht. Für besonders langzeitstabile Aufbauten sind daher Aktoren von Vorteil, die auf Schrumpfprozessen durch Laserbeschuß beruhen. Hier ist es i.a. auch möglich, nach erfolgter Laserjustierung die eingebauten Spannungen durch eine lokale Wärmebehandlung wieder weitgehend abzubauen, ohne die Verformung rückgängig zu machen.

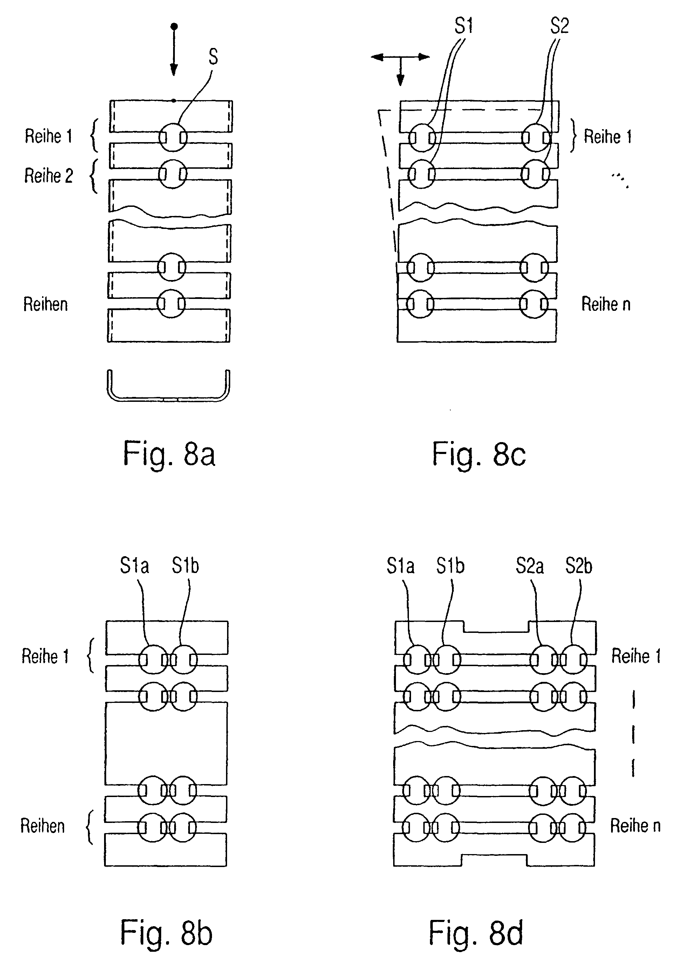

In den Fig. 8a,b sind Beispiele für lineare Aktoren gezeigt (für einen Freiheitsgrad der Justierung), die auf Schrumpfung durch Laserbeschuß beruhen. Die geeigneten Stellen für den Laserbeschuß sind mit "S" gekennzeichnet. Diese Stellen sind verhältnismäßig dünne Stege, durch die einzelne Stellelementglieder verbunden werden, die zwischen der Trägerplatte 2 und der Basisplatte 3 auf geeignete Weise angeordnet sind. Fig. 8c,d zeigen Aktoren, die eine Justierung in zwei Freiheitsgraden zulassen. Werden beispielsweise die Stellen S1 und S2 paarweise beschossen, dann erfolgt eine Verkürzung in y-Richtung. Werden dagegen nur die Stellen S1 oder S2 beschossen, dann tritt eine x-Verschiebung bei gleichzeitig geringerer y-Verschiebung auf. Je nach Höhe der S1/S2-Stellen kann über die Hebelwirkung der Wert der x-Verschiebung verändert werden. Bei den Aktoren entsprechend Fig. 8b und 8d werden abwechselnd die Stellen S1a und S1b oder S2a und S2b beschossen, um die gewünschte Schrumpfung zu erzielen. Die gewünschte Biege-, Knick- und Verwindungssteifigkeit kann wieder durch entsprechende Formgebung des Querschnitts erreicht werden (s. Beispiel in Fig.8a). In Fig. 8a,b,c,d sind jeweils mehrere Reihen von Schwachstellen "S" gezeichnet, an denen durch Laserbeschuß eine Schrumpfung erzielt werden kann. In den meisten Fällen genügt jedoch eine einzige Reihe, wobei die gewünschte Schrumpfung durch wiederholten Laserbeschuß etwa proportional der Schußzahl vergrößert werden kann.

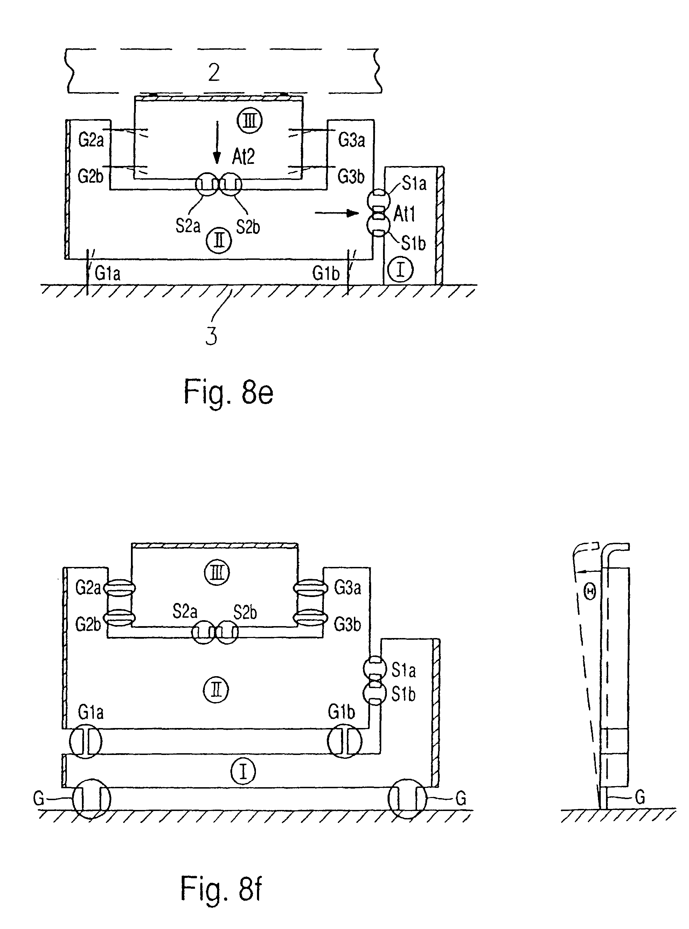

Fig. 8e,f zeigen einen Aktor für x-/y- Justage, der auf einer Kombination zweier linearer Aktoren entsprechend Fig. 8b und Parallelogrammführungen beruht, die mittels biegeweicher Festkörperelemente realisiert sind. Der Vorteil der Ausführung nach Fig. 8e,f gegenüber Fig. 8c,d ist, daß die x- und y-Richtung unabhängig voneinander justiert werden kann. Fig. 8e zeigt zunächst das Grundprinzip. Der erste Aktor Atl in Fig. 8e verschiebt Teil II in x-Richtung gegenüber dem mit der Basis verbundenen Teil I, wenn die Stellen S1a und S1b abwechselnd mit dem Laser beschossen werden. Festkörpergelenke G1a und G1b ermöglichen diese Parallelverschiebung. Der zweite Aktor verschiebt Teil III in y-Richtung, wenn die Stellen S2a und S2b abwechselnd beschossen werden. Die Parallelverschiebung in y-Richtung wird durch die Festkörperelemente G2a,b und G3a,b ermöglicht. Fig. 8f zeigt eine Realisierung des in Fig. 8e gezeigten Prinzips, wobei zusätzliche Festkörpergelenke G für eine Beweglichkeit in Θ - Richtung sorgen, damit mit einem Aktor in der y/z-Ebene eine zusätzliche z-Justage des Linsenträgers 2 ermöglicht wird.

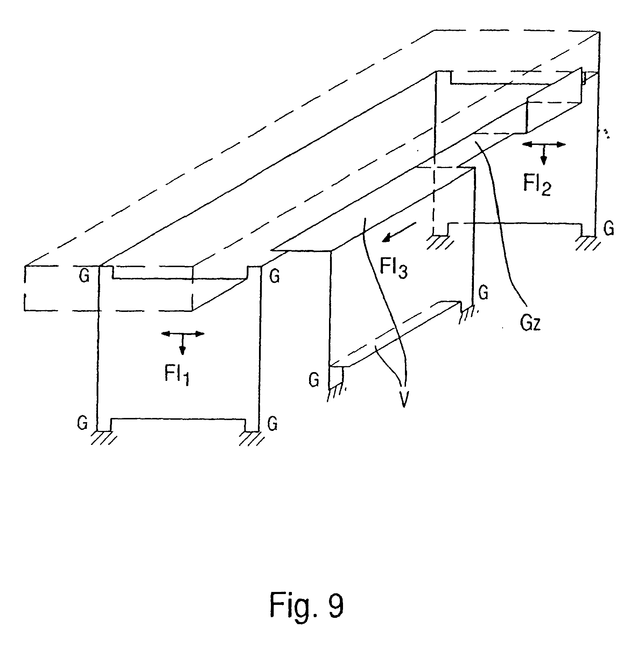

Fig. 9 zeigt schließlich einen entsprechenden Aufbau mit Justagemöglichkeit in 3 Freiheitsgraden (x-, y-, z- Richtung). Der Aufbau nutzt für die Justierung in x- und y-Richtung i.a. zwei Flexelemente für zweidimensionale Justage (beispielsweise entsprechend Fig. 8c,d oder 8e,f) und für die z-Justage ein weiteres Flexelement für eine eindimensionale Justage, das seine z-Bewegung über ein biegeweiches Festkörpergelenk Gz auf die Trägerplatte 2 überträgt. Das Festkörpergelenk Gz ist biegeweich bezüglich der y-Bewegung und steif für eine Zugbelastung in z-Richtung. In der Figur sind beispielhafte Versteifungen V des Flexelements F13 (oben und unten) dargestellt. Steifigkeit bzw. Biegeweichheit aller Aktoren können durch entsprechende Wahl der Querschnitte bzw. geeignete Formgebung der entsprechenden Teile beeinflußt werden.

Die Herstellung der Aktoren erfolgt zweckmäßigerweise mittels Stanzen oder Schneiden (Laserschneiden, Wasserstrahlschneiden) oder Ätzen von dünnen Blechen, evtl. auch mittels galvanoplastischer Verfahren sowie (anschließendes) Biegen oder Pressen. Die Verbindung der Aktoren mit der Basisplatte 3 bzw. der Trägerplatte 2 wird am einfachsten mittels Laser-(Punkt-) Schweißen vorgenommen. Um ein definiertes Verhalten beim Laserjustieren zu erreichen, ist es wichtig, vor dem eigentlichen Justieren vorhandene Spannungen in den Aktoren durch eine geeignete Wärmebehandlung abzubauen.

## Patentansprüche

1. Verstellvorrichtung, mit
- einer Anzahl Stellelemente (At), die durch lokale Beaufschlagung von Strahlungsenergie in ihrer Form veränderbar sind, wobei
- die Stellelemente (At) an ihrem einen Ende mit einer ortsfesten Basisplatte (3) und an ihrem anderen Ende mit einer beweglichen Trägerplatte (2) verbunden sind,
**dadurch gekennzeichnet,daß**
- ein erstes Stellelement (Atl) mit der Trägerplatte (2) in einem Abstand a von einem äußeren Rand der Trägerplatte (2) verbunden ist, und
- in einem Abstand b hiervon ein zweites Stellelement (At3) mit der Trägerplatte (2) verbunden ist, so daß
- mit dem ersten Stellelement (At1) eine Grobjustage und mit dem zweiten Stellelement (At3) eine Feinjustage mit dem Übersetzungsverhältnis a/(a+b) durchführbar ist.

2. Verstellvorrichtung nach Anspruch 1,
**dadurch gekennzeichnet, daß**
- mindestens ein Stellelement (At) als lineares, insbesondere stabförmiges Stellelement ausgebildet ist, welches entlang einer Richtung in der Länge veränderbar ist.

3. Verstellvorrichtung nach einem der Ansprüche 1 oder 2,
**dadurch gekennzeichnet, daß**
- mindestens ein Stellelement eine Anzahl von zwei oder mehr Stellelementgliedern aufweist,
- die in Richtung der Normalen zwischen der Basisplatte (3) und der Trägerplatte (2) mit einem Abstand voneinander angeordnet und jeweils durch mindestens einen Steg (S) miteinander verbunden sind.

4. Verstellvorrichtung nach Anspruch 3,
**dadurch gekennzeichnet, daß**
- mindestens ein Stellelement eine Anzahl von drei oder mehr Stellelementgliedern aufweist, die zwischen der Basisplatte (3) und der Trägerplatte (2) angeordnet sind, wobei
- mindestens zwei Stellelementglieder derart relativ zueinander angeordnet sind, daß sie in Richtung der Normalen zwischen der Basisplatte (3) und der Trägerplatte (2) mit einem Abstand voneinander angeordnet und durch mindestens einen Steg (S) miteinander verbunden sind,
- mindestens zwei Stellelementglieder derart relativ zueinander angeordnet sind, daß sie in einer lateralen Richtung voneinander beabstandet und durch mindestens einen Steg miteinander verbunden sind.

5. Verstellvorrichtung nach Anspruch 1,
**dadurch gekennzeichnet, daß**
- mindestens ein Stellelement ein winkelförmiges Stellelement ist, welches zwei in einem Winkel zueinander angeordnete und durch ein Gelenk (G) verbundene ebene Abschnitte aufweist.

6. Verstellvorrichtung nach Anspruch 5,
**dadurch gekennzeichnet, daß**
- mindestens zwei winkelförmige Stellelemente auf zwei gegenüberliegenden Seiten der Trägerplatte (2) angeordnet sind.

7. Verstellvorrichtung nach Anspruch 5 oder 6,
**dadurch gekennzeichnet, daß**
- das Gelenk durch reduzierte Materialstärke und/oder durch Aussparungen gebildet ist.

8. Verstellvorrichtung nach einem der vorhergehenden Ansprüche,
**dadurch gekennzeichnet, daß**
- mindestens ein Stellelement direkt mit der Basisplatte (3) und der Trägerplatte (2) verbunden ist.

9. Verstellvorrichtung nach Anspruch 8,
**dadurch gekennzeichnet, daß**
- mindestens eine dieser Verbindungen ein Gelenk (G) aufweist.

10. Verstellvorrichtung nach einem der vorhergehenden Ansprüche,
**dadurch gekennzeichnet, daß**
- mindestens ein Stellelement mit einem Winkelelement verbunden ist, welches zwei in einem Winkel zueinander angeordnete und durch ein Gelenk verbundene ebene Abschnitte aufweist, wobei
- das Winkelelement mit seinen ebenen Abschnitten mit der Basisplatte (3) und der Trägerplatte (2) verbunden ist und mindestens eine dieser Verbindungen ein Gelenk (G) aufweist.

11. Verstellvorrichtung nach Anspruch 9 oder 10,
**dadurch gekennzeichnet, daß**
- mindestens eines der Gelenke (G) durch reduzierte Materialstärke und/oder durch Aussparungen gebildet ist.

12. Verstellvorrichtung nach einem oder mehreren der vorhergehenden Ansprüche,
**dadurch gekennzeichnet, daß**
- auf der Trägerplatte (2) eine Linse (1) angeordnet ist.

13. Optoelektronische Sende-/Empfangseinrichtung, mit
- einem Sende-/Empfangsbauelement,
- einer Anschlußöffnung für eine Lichtleitfaser, und
- einer zwischen der Anschlußöffnung und dem Sende-/Empfangsbauelement angeordneten Linse (1),
**gekennzeichnet durch**
- eine Verstellvorrichtung nach Anspruch 12.

14. Optoelektronische Sende-/Empfangseinrichtung nach Anspruch 13,
**dadurch gekennzeichnet, daß**
- das Sende-/Empfangsbauelement an der Verstellvorrichtung montiert ist.

15. Verfahren zum Justieren einer in den Ansprüchen 1 bis 12 genannten Verstellvorrichtung, bei welchem
- den Stellelementen an vorbestimmten Orten (S) Strahlungsenergie einer vorbestimmten Menge zugeführt wird.

16. Verfahren nach Anspruch 15,
**dadurch gekennzeichnet, daß**
- mindestens ein Stellelement eine Anzahl von Stellelementgliedern aufweist, die in Richtung der Normalen zwischen der Basisplatte (3) und der Trägerplatte (2) mit einem Abstand voneinander angeordnet und jeweils durch einen Steg (S) miteinander verbunden sind,
- wobei die Strahlungsenergie den Stegen (S) zugeführt wird.

17. Verfahren nach Anspruch 15,
**dadurch gekennzeichnet, daß**
- mindestens ein Stellelement ein winkelförmiges Stellelement ist, welches zwei in einem Winkel zueinander angeordnete und durch ein Gelenk (G) verbundene ebene Abschnitte aufweist,
- wobei die Strahlungsenergie den ebenen Abschnitten zugeführt wird.

18. Verfahren nach Anspruch 17,
**dadurch gekennzeichnet, daß**
- für eine Vergrößerung des Abstandes der Trägerplatte (2) von der Basisplatte (3) die Strahlungsenergie den der Basisplatte (3) zugewandten ebenen Abschnitten der Stellelemente zugeführt wird, und
- für eine Verkleinerung des Abstandes der Trägerplatte (2) von der Basisplatte (3) die Strahlungsenergie den der Trägerplatte (2) zugewandten ebenen Abschnitten der Stellelemente zugeführt wird.

19. Verfahren nach einem der Ansprüche 15 bis 17,
**dadurch gekennzeichnet, daß**
- die Strahlungsenergie durch einen Laserstrahl (LB) zugeführt wird.

## Claims

1. Adjusting apparatus, having
- a number of actuating elements (At), whose form can be altered by local application of radiation energy,
- the actuating elements (At) being connected to a stationary baseplate (3) at one of their ends and being connected to a movable carrier plate (2) at their other end,
**characterized in that**
- a first actuating element (At1) is connected to the carrier plate (2) at a distance a from an outer edge of the carrier plate (2), and
- at a distance b therefrom, a second actuating element (AT3) is connected to the carrier plate (2), so that
- the first actuating element (At1) can be used to carry out coarse adjustment and the second actuating element (At3) can be used to carry out fine adjustment with the transmission ratio a/(a+b).

2. Adjusting apparatus according to Claim 1,
**characterized in that**
- at least one actuating element (At) is designed as a linear, in particular bar-shaped actuating element whose length can be altered along one direction.

3. Adjusting apparatus according to one of Claims 1 and 2,
**characterized in that**
- at least one actuating element has a number of two or more actuating element members,
- which are arranged in the direction of the normal between the baseplate (3) and the carrier plate (2) at a distance from one another and are each connected to one another by at least one web (S).

4. Adjusting apparatus according to Claim 3,
**characterized in that**
- at least one actuating element has a number of three or more actuating element members arranged between the baseplate (3) and the carrier plate (2),
- at least two actuating element members being arranged relative to one another in such a way that they are arranged in the direction of the normal between the baseplate (3) and the carrier plate (2) at a distance from one another and are connected to one another by at least one web (S),
- at least two actuating element members being arranged relative to one another in such a way that they are spaced apart from one another in a lateral direction and are connected to one another by at least one web.

5. Adjusting apparatus according to Claim 1,
**characterized in that**
- at least one actuating element is an angular actuating element which has two planar sections which are arranged at an angle with respect to one another and are connected by an articulated joint (G).

6. Adjusting apparatus according to Claim 5,
**characterized in that**
- at least two angular actuating elements are arranged on two opposite sides of the carrier plate (2).

7. Adjusting apparatus according to Claim 5 or 6,
**characterized in that**
- the articulated joint is formed by reduced material thickness and/or by cutouts.

8. Adjusting apparatus according to one of the preceding claims,
**characterized in that**
- at least one actuating element is directly connected to the baseplate (3) and the carrier plate (2).

9. Adjusting apparatus according to Claim 8,
**characterized in that**
- at least one of these connections has an articulated joint (G).

10. Adjusting apparatus according to one of the preceding claims
**characterized in that**
- at least one actuating element is connected to an angle element which has two planar sections which are arranged at an angle with respect to one another and are connected by an articulated joint,
- the angle element being connected to the baseplate (3) and the carrier plate (2) by its planar sections and at least one of these connections having an articulated joint (G) (figures 5a, b).

11. Adjusting apparatus according to Claim 9 or 10,
**characterized in that**
- at least one of the articulated joints (G) is formed by reduced material thickness and/or by cutouts.

12. Adjusting apparatus according to one or more of the preceding claims,
**characterized in that**
- a lens (1) is arranged on the carrier plate (2).

13. Optoelectronic transmitting/receiving device, having
- a transmitting/receiving component,
- a connection opening for an optical fibre, and
- a lens (1) arranged between the connection opening and the transmitting/receiving component,
**characterized by**
- an adjusting apparatus according to Claim 12.

14. Optoelectronic transmitting/receiving device according to Claim 13,
**characterized in that**
- the transmitting/receiving component is mounted on the adjusting apparatus.

15. Method for adjusting an adjusting apparatus mentioned in Claims 1 to 12, in which
- radiation energy of a predetermined quantity is fed to the actuating elements at predetermined locations (S).

16. Method according to Claim 15,
**characterized in that**
- at least one actuating element has a number of actuating element members,
- which are arranged in the direction of the normal between the baseplate (3) and the carrier plate (2) at a distance from one another and are each connected to one another by at least one web (S),
- the radiation energy is fed to the webs (S).

17. Method according to Claim 15,
**characterized in that**
- at least one actuating element is an angular actuating element which has two planar sections which are arranged at an angle with respect to one another and are connected by an articulated joint (G),
- the radiation energy being fed to the planar sections.

18. Method according to Claim 17,
**characterized in that**
- for increasing the distance between the carrier plate (2) and the baseplate (3), the radiation energy is fed to those planar sections of the actuating elements which face the baseplate (3), and
- for reducing the distance between the carrier plate (2) and the baseplate (3), the radiation energy is fed to those planar sections of the actuating elements which face the carrier plate (2).

19. Method according to one of claims 15 to 17,
**characterized in that**
- the radiation energy is supplied by a laser beam (LB).

## Revendications

1. Dispositif de réglage, comprenant
- un certain nombre d'éléments (At) d'actionnement, dont la forme peut être modifiée par application locale d'énergie de rayonnement,
- les éléments (At) d'actionnement étant reliés par l'une de leurs extrémités à une plaque (3) de base fixe et par leur autre extrémité à une plaque de support (2) mobile,
**caractérisé en ce que**
- un premier élément (At1) d'actionnement est relié à la plaque de support (2) à une distance a d'un bord extérieur de la plaque de support (2),
- et un deuxième élément (At3) d'actionnement est relié à la plaque de support (2) à une distance b de ce bord,
- de sorte qu'on peut effectuer avec le premier élément (At1) d'actionnement un ajustement grossier et avec le deuxième élément (At3) d'actionnement un ajustement fin avec le rapport de transmission de a/(a+b).

2. Dispositif de réglage suivant la revendication 1, **caractérisé en ce qu'**au moins un élément (At) d'actionnement est réalisé sous la forme d'un élément d'actionnement linéaire, en particulier en forme de barre, dont la longueur peut être modifiée le long d'une direction.

3. Dispositif de réglage suivant la revendication 1 ou 2, **caractérisé en ce qu'**au moins un élément d'actionnement comporte deux segments d'élément d'actionnement ou davantage, qui sont disposés à distance entre eux dans la direction de la normale entre la plaque (3) de base et la plaque de support (2) et qui sont respectivement reliés entre eux par au moins une entretoise (S).

4. Dispositif de réglage suivant la revendication 3, **caractérisé en ce qu'**au moins un élément d'actionnement comporte trois segments d'élément d'actionnement ou davantage, qui sont disposés entre la plaque (3) de base et la plaque de support (2),
- au moins deux segments d'élément d'actionnement étant disposés l'un par rapport à l'autre de telle sorte qu'ils sont disposés à distance entre eux dans la direction de la normale entre la plaque (3) de base et la plaque de support (2) et qu'ils sont reliés entre eux par au moins une entretoise (S),
- au moins deux segments d'élément d'actionnement étant disposés l'un par rapport à l'autre de telle sorte qu'ils sont mutuellement distants dans une direction latérale et qu'ils sont reliés entre eux par au moins une entretoise.

5. Dispositif de réglage suivant la revendication 1, **caractérisé en ce qu'**au moins un élément d'actionnement est un élément d'actionnement angulaire, qui comporte deux parties planes disposées en faisant un angle entre elles et reliées par une articulation (G).

6. Dispositif de réglage suivant la revendication 5, **caractérisé en ce qu'**au moins deux éléments d'actionnement angulaires sont disposés sur deux côtés opposés de la plaque de support (2).

7. Dispositif de réglage suivant la revendication 5 ou 6, **caractérisé en ce que** l'articulation est formée par une épaisseur de matériau réduite et/ou par des évidements.

8. Dispositif de réglage suivant l'une des revendications précédentes, **caractérisé en ce qu'**au moins un élément d'actionnement est directement relié à la plaque (3) de base et à la plaque de support (2).

9. Dispositif de réglage suivant la revendication 8, **caractérisé en ce qu'**au moins une de ces liaisons comporte une articulation (G).

10. Dispositif de réglage suivant l'une des revendications précédentes, **caractérisé en ce qu'**au moins un élément d'actionnement est relié à un élément angulaire qui comporte deux parties planes disposées en faisant un angle entre elles et reliées par une articulation,
- l'élément angulaire étant relié par ses parties planes à la plaque (3) de base et à la plaque de support (2) et qu'au moins une de ces liaisons comportant une articulation (G).

11. Dispositif de réglage suivant la revendication 9 ou 10, **caractérisé en ce qu'**au moins une des articulations (G) est formée par une épaisseur de matériau réduite et/ou par des évidements.

12. Dispositif de réglage suivant l'une ou plusieurs des revendications précédentes, **caractérisé en ce qu'**une lentille (1) est disposée sur la plaque de support (2).

13. Équipement émetteur/récepteur optoélectronique, comprenant
- un module émetteur/récepteur,
- une ouverture de raccordement pour une fibre optique, et
- une lentille (1) disposée entre l'ouverture de raccordement et le module émetteur/récepteur,
**caractérisé par** un dispositif de réglage suivant la revendication 12.

14. Équipement émetteur/récepteur optoélectronique suivant la revendication 13, **caractérisé en ce que** le module émetteur/récepteur est monté sur le dispositif de réglage.

15. Procédé d'ajustement d'un dispositif de réglage mentionné dans les revendications 1 à 12, suivant lequel de l'énergie de rayonnement est apportée dans une quantité prédéfinie aux éléments d'actionnement en des emplacements (S) prédéfinis.

16. Procédé suivant la revendication 15, **caractérisé en ce qu'**au moins un élément d'actionnement comporte un certain nombre de segments d'élément d'actionnement qui sont disposés à distance entre eux dans la direction de la normale entre la plaque (3) de base et la plaque de support (2) et qui sont respectivement reliés entre eux par au moins une entretoise (S),
- l'énergie de rayonnement étant apportée aux entretoises (S).

17. Procédé suivant la revendication 15, **caractérisé en ce qu'**au moins un élément d'actionnement est un élément d'actionnement angulaire qui comporte deux parties planes disposées en formant un angle entre elles et reliées par une articulation (G),
- l'énergie de rayonnement étant apportée aux parties planes.

18. Procédé suivant la revendication 17, **caractérisé en ce que**
- pour augmenter la distance entre la plaque de support (2) et la plaque (3) de base, l'énergie de rayonnement est apportée aux parties planes des éléments d'actionnement qui sont tournées vers la plaque (3) de base,
- et pour diminuer la distance entre la plaque de support (2) et la plaque (3) de base, l'énergie de rayonnement est apportée aux parties planes des éléments d'actionnement qui sont tournées vers la plaque de support (2).

19. Procédé suivant l'une des revendications 15 à 17, **caractérisé en ce que** l'énergie de rayonnement est apportée par un faisceau (LB) laser.
